# EUROPÄISCHE PATENTANMELDUNG

(11) **EP 2 469 131 A1**
(43) Veröffentlichungstag der Anmeldung: **27.06.2012**
(21) Anmeldenummer: 11010016.1
(22) Anmeldetag: 20.12.2011
(51) Int. Cl.: F16J 15/10

(54) **Antriebseinheit mit Dichtung**

(30) Priorität: 22.12.2010 DE 102010055674
(71) Anmelder: MULTIVAC Sepp Haggenmüller GmbH & Co KG, 87787 Wolfertschwenden (DE)
(72) Erfinder: Waizenegger, Kurt, 88319 Aitrach (DE)
(74) Vertreter: Grünecker, Kinkeldey, Stockmair & Schwanhäusser

(57) **Zusammenfassung**

Die Erfindung bezieht sich auf eine Antriebseinheit (2), die ein Motorgehäuse (7) und ein Getriebegehäuse (6) umfasst, wobei eine Dichtung (5) zwischen dem Motorgehäuse (7) und dem Getriebegehäuse (6) vorgesehen ist.

## Beschreibung

Die Erfindung bezieht sich auf eine Antriebseinheit, die ein Motorgehäuse und ein Getriebegehäuse sowie eine Dichtung umfasst, gemäß dem Oberbegriff des Anspruchs 1.

Bekannt sind Antriebseinheiten, die einen Motor und ein Getriebe aufweisen. Im Bereich der Lebensmittelindustrie sind besondere Anforderungen an die Reinigbarkeit solcher Antriebseinheiten gestellt. Daher sind die Antriebseinheiten für solche Anwendungen als komplette Einheit lackiert, um den zum Teil besonders aggressiven Reinigungsmitteln widerstehen zu können. Die Antriebseinheiten werden u.a. auch als Antriebe bei Delta-Robotern eingesetzt, wobei die Delta-Roboter beispielsweise zum Einlegen von Produkten in Kunststoffschalen oder in Folie geformte Mulden ihre Anwendung finden. Eine durchgehend über das Motor- und Getriebegehäuse aufgebrachte Lackierung erfüllt die Anforderungen im Lebensmittelbereich. Kommt es zu einem Problem mit einem Motor oder einem Getriebe, ist es erforderlich, die Antriebseinheit als Ganzes zu ersetzen. Dies ist teuer, da der Motor üblicherweise ein Servomotor ist und das Getriebe als Planetengetriebe ausgeführt sein kann. Das Ersetzen eines Motors oder eines Getriebes führt zum Auftrennen der lackierten Oberfläche an der Trennstelle zwischen Motorgehäuse und Getriebegehäuse. Diese Trennstelle bleibt auch nach dem Austausch eines Motors oder Getriebe ohne Nachlackierung der wieder montierten Antriebseinheit vorhanden. Dies führt dazu, dass bei einer Reinigung der Antriebseinheit die Reinigungsflüssigkeit an der Trennstelle unter den Lack gelangen kann und die zum Teil sehr aggressiven Zusätze in der Reinigungsflüssigkeit die Lackierung vom Gehäuse trennen können und es zur Beschädigung der Lackierung kommt. Diese Beschädigungen sind im Lebensmittelbereich nicht zulässig.

Aufgabe der vorliegenden Erfindung ist es, eine hygienische und reinigbare Antriebseinheit, die ein Motorgehäuse und ein Getriebegehäuse umfasst, zur Verfügung zu stellen, die eine verbesserte Möglichkeit zum Reinigen aufweist und einen kostengünstigen Austausch eines Motors oder eines Getriebes ermöglicht.

Diese Aufgabe wird gelöst durch eine Antriebseinheit mit den Merkmalen des Anspruchs 1. Vorteilhafte Weiterbildungen der Erfindung sind in den Unteransprüchen angegeben.

Die erfindungsgemäße Antriebseinheit umfasst ein Motorgehäuse und ein Getriebegehäuse, wobei das Motorgehäuse und/oder das Getriebegehäuse separat vom jeweils anderen Gehäuse lackiert ist und das Motorgehäuse mit dem Getriebegehäuse verbunden ist. Es ist eine Dichtung zwischen dem Motorgehäuse und Getriebegehäuse vorgesehen, wobei eine erste Schnittstelle des Motorgehäuses und eine zweite Schnittstelle des Getriebegehäuses teilweise auf Block in axialer Richtung der Antriebseinheit aneinander liegen und die Dichtung zusammengedrückt ist, wobei die Dichtung eine Silikondichtung ist. Die Silikondichtung ist im Lebensmittelbereich zugelassen und besitzt die notwendige Resistenz gegenüber Reinigungsflüssigkeiten, die aggressive Zusatzmittel beinhalten, damit keine Reinigungsflüssigkeit an einen Randbereich der Lackierung gelangen kann, so dass ein Eindringen der Reinigungsflüssigkeit unter die Lackierung verhindert ist.

Vorzugsweise ist die Dichtung als dünne Platte ausgeführt und weist eine Dicke von 1,5 mm bis 2,0 mm auf. In dieser Form ist die Silikondichtung kostengünstig herstellbar.

Die Außenkontur der Dichtung ist bevorzugt kongruent zu der Außenkontur der Schnittstelle des Motor- oder Getriebegehäuses. Damit muss die Lackierung nur bis in einen äußeren Teilbereich der Schnittstelle reichen, aber soweit, dass sich keine Kante des Randes der Lackierung außerhalb der Dichtung befindet.

Vorzugsweise ist die Dichtung zum Abdichten bis zu 0,5 mm, bevorzugt nur bis zu 0,2 mm, zusammengedrückt, um ein Eindringen von Reinigungsflüssigkeiten zwischen der Dichtung und dem Motorgehäuse und/oder der Dichtung und dem Getriebegehäuse zu verhindern.

Vorzugsweise ist die Lackierung des Motorgehäuses und/oder des Getriebegehäuses bis in den Bereich der Schnittstelle ausgeführt, der von der Dichtung abgedeckt ist, um ein Eindringen von Flüssigkeiten unter die Lackierung zu verhindern.

Die Antriebseinheit umfasst bevorzugt Schrauben zum Verbinden des Motorgehäuses mit dem Getriebegehäuse und es sind Dichtscheiben zwischen den Schrauben und dem Getriebegehäuse oder Motorgehäuse vorgesehen, um die Lackierung des Motorgehäuses oder Getriebegehäuses bei einer Montage nicht zu beschädigen.

Im Folgenden wird ein vorteilhaftes Ausführungsbeispiel der Erfindung anhand einer Zeichnung näher erläutert.

Im Einzelnen zeigen:
- Figur 1: eine schematische Ansicht eines Delta-Roboters mit einer erfindungsgemäßen Antriebseinheit,
- Figur 2: eine schematische Ansicht einer Antriebseinheit,
- Figur 3: einen Ausschnitt F der Schraubenverbindung,
- Figur 4: einen Vertikalschnitt durch den Bereich den Antriebseinheit, an dem das Getriebegehäuse und das Motorgehäuse aneinander anliegen.

Gleiche Komponenten sind in den Figuren durchgängig mit gleichen Bezugszeichen versehen.

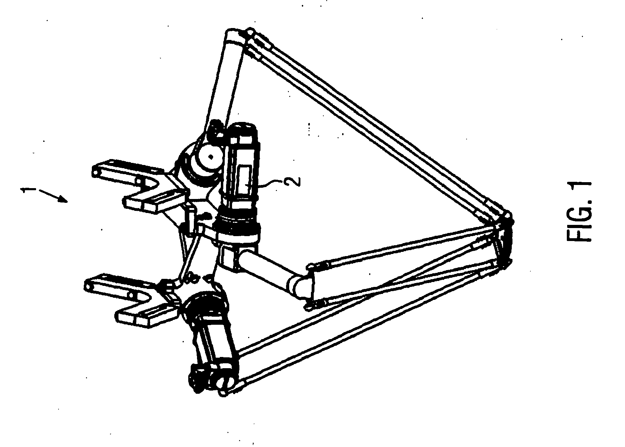

Fig. 1 zeigt einen Delta-Roboter 1 mit drei erfindungsgemäßen Antriebseinheiten 2, von denen jede eine Schwenkbewegung eines Arms des Roboters antreibt.

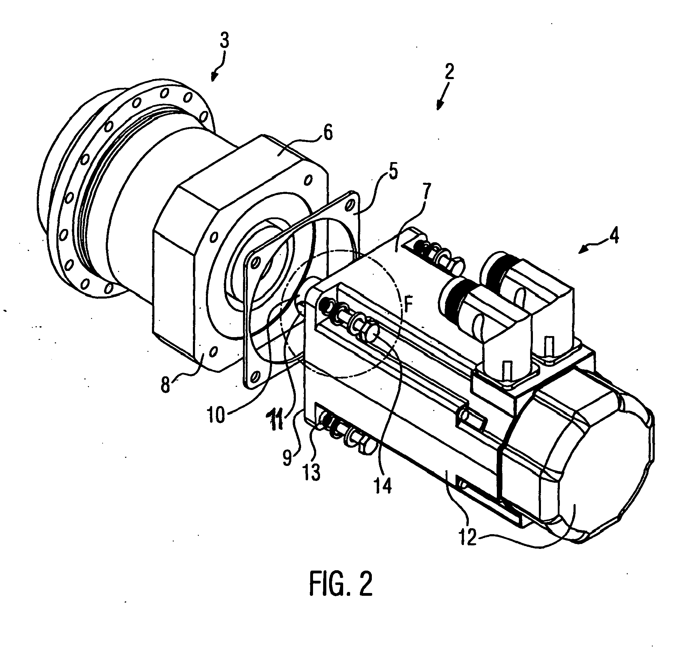

In Fig. 2 ist die Antriebseinheit 2 mit einem Getriebe 3 und einem Motor 4 dargestellt. Eine Dichtung 5 wird zwischen einem Getriebegehäuse 6 und einem Motorgehäuse 7 montiert, wobei die Dichtung 5 eine erste Schnittstelle 8 des Getriebegehäuses 6 und ein zweite Schnittstelle 9 des Motorgehäuses 7 weitestgehend abdeckt. Über eine Motorwelle 10 mit einer Passfeder 11 wird das Drehmoment auf das Getriebe 3 mittels einer nicht dargestellten Aufnahme der Welle 10 übertragen. Alternativ ist auch ein Spannsatz im Getriebe 3 denkbar, der die Motorwelle 10 ohne die Passfeder 11 axial zentriert.

Beispielsweise besteht das Getriebegehäuse 6 aus eloxiertem Aluminium und das Motorgehäuse ist an seinen Außenseiten 12 bis in den Bereich der Schnittstelle 9 lackiert. Bei einem Ausfall des Getriebes 3 oder des Motors 4 kann das defekte Teil 3, 4 demontiert werden und das neue Teil 3, 4 wieder montiert werden, ohne dass die Antriebseinheit 2 als Ganzes lackiert werden muss, da die Dichtung 5 die Kanten an den Endbereichen der Lackierung gegen Reinigungsflüssigkeiten abdichtet.

Um bei der Montage des Motorgehäuses 7 an das Getriebegehäuse 6 die Lackierung im Bereich einer Montagebohrung 13 durch zur Verbindung der beiden Gehäuse 6, 7 vorgesehene Schrauben 14 nicht zu beschädigen, d.h. um auch an diesen Stellen ein Eindringen von Reinigungsflüssigkeiten unter die Lackierung zu verhindern, sind Dichtungsscheiben 15 vorgesehen.

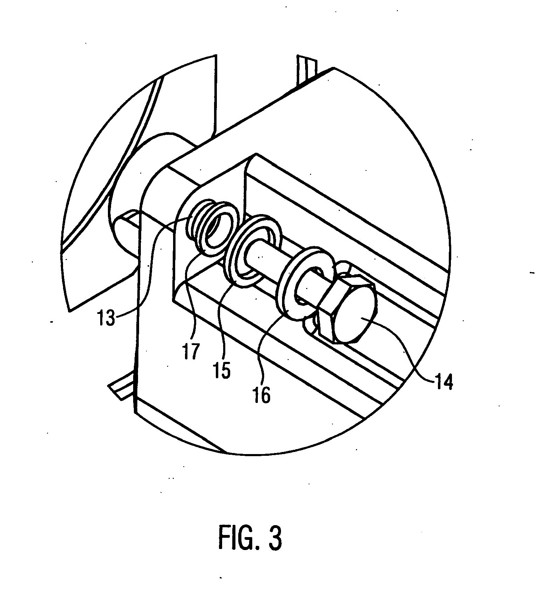

In Fig. 3 ist der Ausschnitt F der Fig. 2 vergrößert dargestellt. Die Schraube 14 mit einer Unterlegscheibe 16 wirkt bei Montage des Motorgehäuses 7 an das Getriebegehäuse 6 auf eine Bundbuchse 17, die in die Montagebohrung 13 eingesetzt ist. Dabei wird die Unterlegscheibe 16 auf Block mit der Bundbuchse 17 verschraubt. Die Silikondichtscheibe 15 liegt um die Bundbuchse 17, sowie zwischen dem Motorgehäuse 7 und der Unterlegscheibe 16, an. Die Stärke der Silikondichtscheibe 15 ist im Vergleich zur Höhe des Bundes der Bundbuchse 17 um ein Differenzmaß größer und die Silikondichtscheibe 15 wird um dieses Differenzmaß zusammengedrückt, um die Dichtwirkung zu erzielen. Vorzugsweise ist das Differenzmaß kleiner als 0,5 mm.

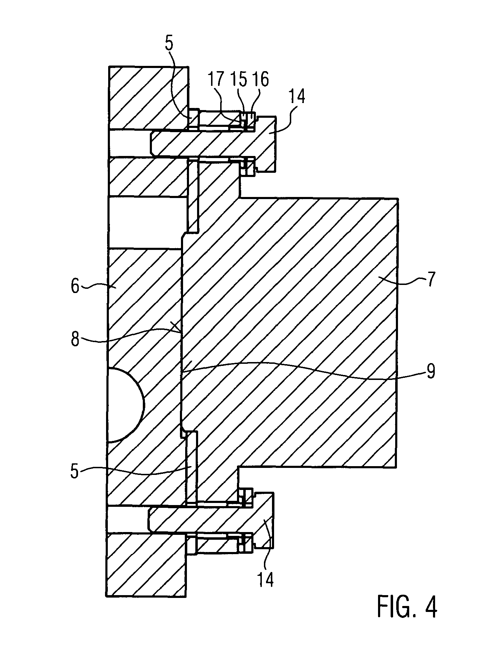

Figur 4 zeigt einen Vertikalschnitt durch den Bereich der Antriebseinheit 2, an dem das Getriebegehäuse 6 und das Motorgehäuse 7 aneinander anliegen. Zu sehen ist hier, dass der mittlere Bereich der zum Getriebegehäuse 6 weisenden Schnittstelle 9 des Motorgehäuses 7 als Vorsprung ausgebildet ist, um den herum sich die Dichtung 5 befindet. In der in Figur 4 gezeigten Stellung, in der das Getriebegehäuse 6 mit dem Motorgehäuse 7 gekoppelt ist, liegen die beiden Schnittstellen 8, 9 des Getriebegehäuses 6 und des Motorgehäuses 7 auf Block, d.h. flächig aneinander. Die Dichtung 5 hat dabei eine solche Stärke, dass sie in dieser Situation zusammen gedrückt ist.

Im Vertikalschnitt der Figur 4 ist auch die Situation an der Schraube 14 zu sehen, bei der in analoger Weise die Silikondichtscheibe 15 zusammengedrückt ist, wenn die Schraube 14 so weit angezogen ist, dass ihre Unterlegscheibe 16 mit der Bundbuchse 17 auf Block liegt und die Bundbuchse 17 ihrerseits am Flansch des Motorgehäuses 7 anliegt.

## Patentansprüche

1. Antriebseinheit (2), die ein Motorgehäuse (7) und ein Getriebegehäuse (6) umfasst, wobei das Motorgehäuse (7) und/oder das Getriebegehäuse (6) separat von dem jeweils anderen Gehäuse (6, 7) lackiert ist und das Motorgehäuse (7) mit dem Getriebegehäuse (6) verbunden ist, wobei eine Dichtung (5) zwischen dem Motorgehäuse (7) und dem Getriebegehäuse (6) vorgesehen ist, und wobei eine erste Schnittstelle (9) des Motorgehäuses (7) und eine zweite Schnittstelle (8) des Getriebegehäuses (6) teilweise auf Block in axialer Richtung aneinander liegen und die Dichtung (5) zusammengedrückt ist, **dadurch gekennzeichnet, dass** die Dichtung (5) eine Silikondichtung ist.

2. Antriebseinheit nach Anspruch 1, **dadurch gekennzeichnet, dass** die Dichtung (5) als eine dünne Platte ausgeführt ist.

3. Antriebseinheit nach Anspruch 2, **dadurch gekennzeichnet, dass** die Dichtung (5) eine Dicke von 1,5 mm bis 2 mm aufweist.

4. Antriebseinheit nach einem der vorangehenden Ansprüche, **dadurch gekennzeichnet, dass** die Außenkontur der Dichtung (5) kongruent zu der Außenkontur der Schnittstelle (9) von Motorgehäuse (7) oder der Schnittstelle (8) Getriebegehäuse (6) ist.

5. Antriebseinheit nach einem der vorangehenden Ansprüche, **dadurch gekennzeichnet, dass** die Dichtung (5) zum Abdichten bis zu 0,5 mm zusammengedrückt ist.

6. Antriebseinheit nach einem der vorangehenden Ansprüche, **dadurch gekennzeichnet, dass** die Lackierung des Motorgehäuses (7) und/oder des Getriebegehäuses (6) bis in den Bereich der Schnittstelle (8, 9) ausgeführt ist, der von der Dichtung (5) abgedeckt ist.

7. Antriebseinheit nach einem der vorangehenden Ansprüche, **dadurch gekennzeichnet, dass** die Antriebseinheit (2) mehrere Schrauben (14) zum Verbinden des Motorgehäuses (7) mit dem Getriebegehäuse (6) umfasst und Dichtscheiben (15) zwischen den Schrauben (14) und dem Getriebegehäuse (6) oder Motorgehäuse (7) vorgesehen sind, um die Lackierung des Motorgehäuses (7) und/oder des Getriebegehäuses (6) bei einer Montage nicht zu beschädigen.
